# EUROPEAN PATENT APPLICATION

(11) **EP 2 990 317 A1**
(43) Date of publication of application: **02.03.2016**
(21) Application number: 15172449.9
(22) Date of filing: 17.06.2015
(51) Int. Cl.: B62J 27/00, B62J 99/00

(54) **ARRANGEMENT OF MOTORCYCLE TILT SENSOR**

(30) Priority: 29.08.2014 TW 103129923
(71) Applicant: Kwang Yang Motor Co., Ltd., Kaohsiung City (TW)
(72) Inventor: Tung, Pei-Chun, Cambridge, CB1 1AH (GB); Huang, Chun-Hao, Cambridge, CB1 1AH (GB)
(74) Representative: Horak, Michael

(57) **Abstract**

The present invention relates to an arrangement of a motorcycle tilt sensor. The motorcycle (2) includes a frame unit (3), a head tube (31) and a fuel tank (2a). An engine unit (2b) is arranged under the fuel tank (2a). A seat cushion (2c) is arranged at a side of the fuel tank (2a) facing rearward to support a rider sitting thereon. A tilt sensor (8) is set between the head tube (31) and the fuel tank (2a). With the tilt sensor (8) being arranged in a space delimited by the head tube (31), the pair of left and right upper support tubes (32), the pair of left and right lower support tubes (33), and the fuel tank (2a), the head tube (31), the upper support tubes (32), and the lower support tubes (33) collectively protect the tilt sensor (8) from being hit.

## Description

### (a) Technical Field of the Invention

The present invention relates generally to an arrangement of a motorcycle tilt sensor, and more particularly to an arrangement of a motorcycle tilt sensor that protects the tilt sensor from being hit and damaged due to tilting of the motorcycle so as to improve the operation effectiveness of the motorcycle.

### (b) Description of the Prior Art

A motorcycle 1 that is ridden by straddling over the motorcycle is often equipped with a tilt sensor 12 that prevents risks caused by continuous operation of an engine unit 11 after the motorcycle 1 tilts down. The tilt sensor 12 functions to detects the occurrence of the motorcycle 1 tilting down and the tilt sensor 12 is operable to shut down the operation of the engine unit 11 by cutting off power supplied thereto.

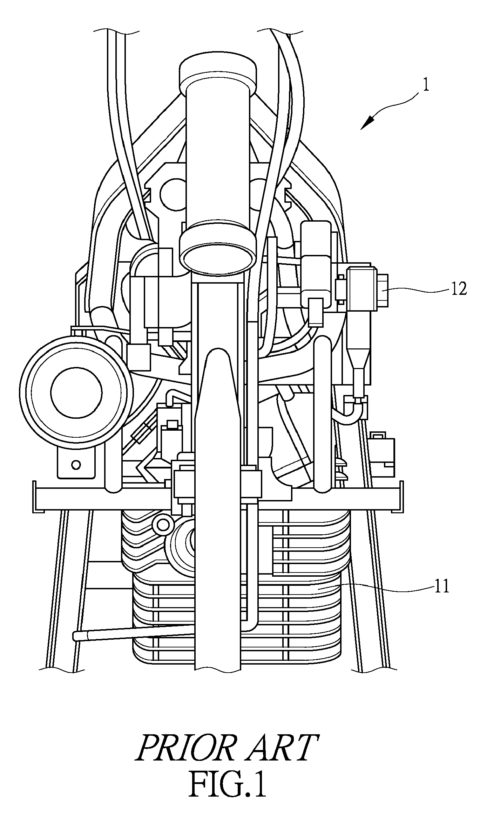

As shown in FIG 1, the tilt sensor 12 is arranged at one side of the motorcycle 1. When the motorcycle 1 is tilting down in a direction toward the side where the tilt sensor 12 is mounted, the tilt sensor 12 would readily get hit due to the tilting down of the motorcycle 1. Such hitting would often damage and make the tilt sensor 12 losing functionality so that the engine unit 11 may continues the operation without being shut down by the tilting of the motorcycle 1 and eventually, undesired risk may occur. Further, the tilt sensor 12 mounted at one side of the motorcycle 1 would absolutely increase the dimension of the motorcycle 1 in a width direction thereof, this increasing the overall width of the motorcycle 1.

Thus, it is desired to provide an arrangement of a motorcycle tilt sensor that overcomes the problem of the prior art device that a tilt sensor is readily hit and damaged due to tilting down of a motorcycle so as not to be operable to shut down the operation of an engine unit.

### SUMMARY OF THE INVENTION

The primary object of the preset invention is to provide an arrangement of a motorcycle tilt sensor, which helps overcome the deficiency that a conventional tilt sensor is readily hit due to tilting down of a motorcycle so as to be damaged and losing functionality thereof.

To achieve the above object, a technical solution adopted is that an arrangement of a motorcycle tilt sensor is provided. The motorcycle comprises at least a frame unit. The frame unit comprises a head tube. The head tube comprises a steering mechanism mounted thereto. A fuel tank is arranged behind the steering mechanism and set on the frame unit. An engine unit is arranged under the fuel tank to generate power. A seat cushion is arranged at a side of the fuel tank facing rearward to support a rider sitting thereon. A tilt sensor is set between the head tube and the fuel tank.

An efficacy that the present invention may achieve with the above technical solution is that a tilt sensor is arranged in a space delimited by a head tube, a pair of left and right upper support tubes, a pair of left and right lower support tubes, and a fuel tank so that the head tube, the upper support tubes, and the lower support tubes help protect the tilt sensor from being hit or impacted and thus the deficiency that the tilt sensor is readily damaged due to tilting down of a motorcycle can be eliminated and the space delimited by the head tube, the pair of left and right upper support tubes, the pair of left and right lower support tubes, and the fuel tank can be fully used to thereby improve the utilization of the motorcycle.

Another efficacy of the present invention is that the tilt sensor is set behind the head tube so that the tilt sensor is allowed to be set on a body center line of the motorcycle thereby improving the utilization of the tilt sensor.

A further efficacy of the present invention is that a front fixing section of a second mounting bracket is arranged in the form of a horizontal L-shape, which helps keep the orientability of the tilt sensor so as to improve the utilization of the tilt sensor.

The foregoing objectives and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG 1 is a schematic view illustrating a conventional motorcycle tilt sensor.
FIG 2 is a schematic view illustrating a motorcycle tilt sensor according to the present invention.
FIG 3 is an exploded view showing an arrangement of the motorcycle tilt sensor according to the present invention.
FIG 4 is a perspective view, in an assembled form, showing the arrangement of the motorcycle tilt sensor according to the present invention.

### DETAILED DESCRIPTION OF THE PREFERRED EMBODIMENTS

The following descriptions are exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

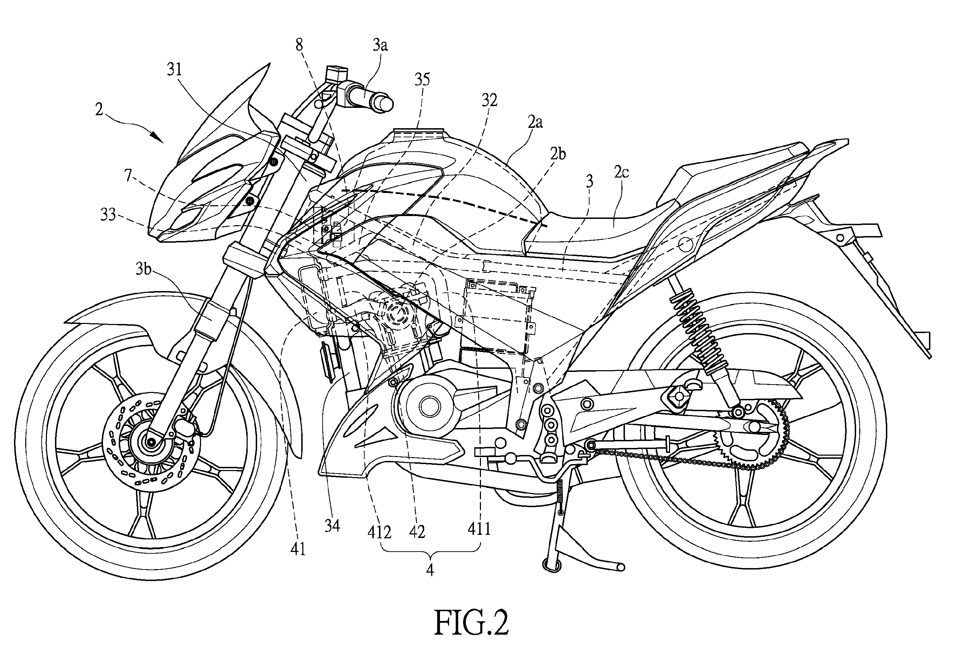

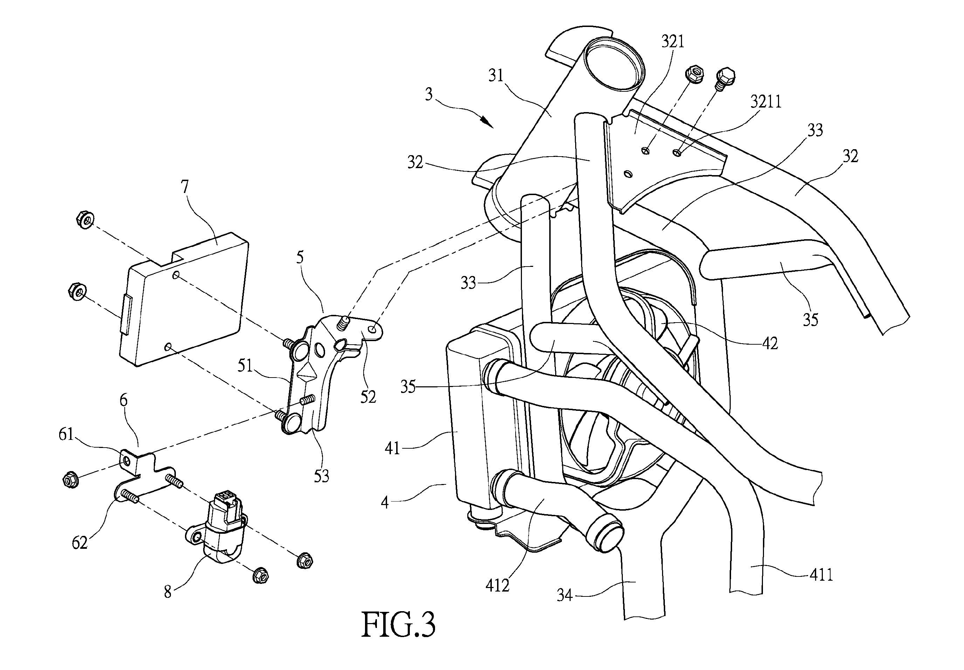

Referring first to FIGS. 2 and 3, the present invention provides a straddling motorcycle 2, which comprises at least a frame unit 3. The frame unit 3 comprises a head tube 31 to which a steering mechanism 3a is mounted. The head tube 31 has a lower end to which a shock absorber 3b is coupled. The head tube 31 comprises a pair of left and right upper support tubes 32 extending therefrom in a direction toward a rear side of the motorcycle. The head tube 31 also comprises a pair of left and right lower support tubes 33 extending therefrom toward the rear side of the motorcycle and located below the upper support tubes 32. The lower support tubes 33 have lower ends to which a down tube 34 is connected. Vertical tubes 35 are arranged respectively between the upper support tubes 32 and the lower support tubes 33.

As shown in FIGS. 2 and 3, a fuel tank 2a is arranged rearward of the steering mechanism 3a and located on the pair of left and right upper support tubes 32. An engine unit 2b is arranged below the fuel tank 2a to generate power. A seat cushion 2c is arranged rearward of the fuel tank 2a for supporting a rider sitting thereon.

As shown in FIGS. 2 and 3, the lower support tubes 33 comprise a radiator assembly 4 mounted thereto. The radiator assembly 4 comprises a radiator 41 and a radiator fan 42. The radiator 41 comprises an inlet tube 411 and an outlet tube 412. The inlet tube 411 and the outlet tube 412 are connected to the engine unit 2b to effectively remove a high temperature generated by the operation of the engine unit 2b thereby maintaining a normal operation of the engine unit 2b.

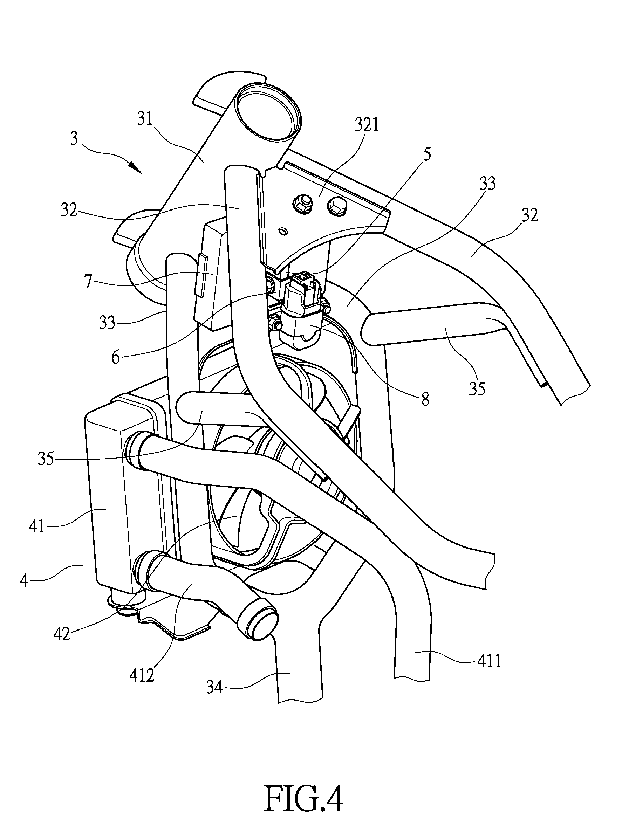

As shown in FIGS. 3 and 4, the pair of left and right upper support tubes 32 comprises a fixation board 321 mounted thereto. The fixation board 321 is arranged to extend from the head tube 31, along the pair of left and right upper support tubes 32, in a direction toward the rear side of the motorcycle. The fixation board 321 comprises a mounting section 3211, and the mounting section 3211 is composed of a plurality of through holes. The fixation board 321 receives a first mounting bracket 5 to be mounted thereto and the first mounting bracket 5 receives a second mounting bracket 6 to be mounted thereto.

As shown in FIGS. 3 and 4, the first mounting bracket 5 is an inverted L-shaped bracket. The first mounting bracket 5 comprises a front fastening section 51 facing the front side of the motorcycle, an upper fastening section 52 facing an upper side of the motorcycle, and a side fastening section 53 facing a lateral side of the motorcycle. The front fastening section 51 receives a voltage regulator 7 to be mounted thereto. The upper fastening section 52 allows the first mounting bracket 5 to be mounted to the fixation board 321. The side fastening section 53 receives the second mounting bracket 6 to be mounted thereto.

As shown in FIGS. 3 and 4, the second mounting bracket 6 comprises a front fixing section 61 facing the front side of the motorcycle and a rear fixing section 62 facing the rear side of the motorcycle. The front fixing section 61 is in the form of a horizontal L-shape and the front fixing section 61 is mounted, in a sideway manner, to the side fastening section 53 of the first mounting bracket 5 in order to fix the second mounting bracket 6 to the first mounting bracket 5. The rear fixing section 62 receives a tilt sensor 8 to be mounted thereto.

As shown in FIGS. 3 and 4, in an embodiment of the arrangement of the motorcycle tilt sensor according to the present invention, the tilt sensor 8 is first mounted to the rear fixing section 62 of the second mounting bracket 6. In other words, the tilt sensor 8 and the second mounting bracket 6 are first combined together to form a sub-assembly Meanwhile, the voltage regulator 7 is mounted to the front fastening section 51 of the first mounting bracket 5. Then, the front fixing section 61 of the second mounting bracket 6 is fastened to the side fastening section 53 of the first mounting bracket 5 to have the second mounting bracket 6 that comprises the tilt sensor 8 mounted thereto securely mounted to the first mounting bracket 5. As such, the first mounting bracket 5 and the second mounting bracket 6 are combined to form another sub-assembly. In this way, convenience and easiness of mounting the voltage regulator 7 and the tilt sensor 8 together to the first mounting bracket 5 can be achieved. Finally, the first mounting bracket 5 that comprises the voltage regulator 7, the second mounting bracket 6, and the tilt sensor 8 mounted thereto is fastened, via the upper fastening section 52 of the first mounting bracket 5, to the mounting section 3211 of the fixation board 321 so that the tilt sensor 8 is set at a location that is behind the head tube 31 and in front of the fuel tank 2a. In other words, the tilt sensor 8 is located between the radiator assembly 4 and the steering mechanism 3a. More precisely, the tilt sensor 8 is arranged in a space delimited by the head tube 31, the pair of left and right upper support tubes 32, the pair of left and right lower support tubes 33, and the fuel tank 2a with the front of the tilt sensor 8 being covered by the voltage regulator 7 and the head tube 31 and left and right sides of the tilt sensor 8 respectively covered by the upper support tubes 32 and the lower support tubes 33. This means the head tube 31, the upper support tubes 32, and the lower support tubes 33 help prevent the tilt sensor 8 from being hit or impacted. In this way, the deficiency that the tilt sensor 8 is readily damaged due to tilting down of the motorcycle 2 is eliminated. In addition, full use of the space delimited among the head tube 31, the pair of left and right upper support tubes 32, the pair of left and right lower support tubes 33, and the fuel tank 2a can be achieved. Further, the tilt sensor 8 is located behind the head tube 31, allowing the tilt sensor 8 to be set at a body center line of the motorcycle 2.

An efficacy of the present invention is that the tilt sensor 8 is arranged in a space delimited by a head tube 31, a pair of left and right upper support tubes 32, a pair of left and right lower support tubes 33, and a fuel tank 2a so that the head tube 31, the upper support tubes 32, and the lower support tubes 33 help protect the tilt sensor 8 from being hit or impacted and thus the deficiency that the tilt sensor 8 is readily damaged due to tilting down of a motorcycle 2 can be eliminated and the space delimited by the head tube 31, the pair of left and right upper support tubes 32, the pair of left and right lower support tubes 33, and the fuel tank 2a can be fully used to thereby improve the utilization of the motorcycle 2.

Another efficacy of the present invention is that the tilt sensor 8 is set behind the head tube 31 so that the tilt sensor 8 is allowed to be set on a body center line of the motorcycle 2 thereby improving the utilization of the tilt sensor 8.

A further efficacy of the present invention is that a front fixing section 61 of a second mounting bracket 6 is arranged in the form of a horizontal L-shape, which helps keep the orientability of the tilt sensor 8 so as to improve the utilization of the tilt sensor 8.

It will be understood that each of the elements described above, or two or more together may also find a useful application in other types of methods differing from the type described above.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the claims of the present invention.

## Claims

1. An arrangement of a motorcycle tilt sensor, the motorcycle (2) comprising at least a frame unit (3), the frame unit (3) comprising a head tube (31), the head tube (31) comprising a steering mechanism (3a) mounted thereto, a fuel tank (2a) being arranged behind the steering mechanism (3a) and set on the frame unit (3), an engine unit (2b) being arranged under the fuel tank (2a) to generate power, a seat cushion (2c) being arranged at a side of the fuel tank (2a) facing rearward to support a rider sitting thereon, **characterized in that** a tilt sensor (8) is set between the head tube (31) and the fuel tank (2a).

2. The arrangement of the motorcycle tilt sensor according to claim 1, wherein the head tube (31), the pair of left and right upper support tubes (32), the pair of left and right lower support tubes (33), and the fuel tank (2a) collectively delimit a space in which a voltage regulator (7) is arranged.

3. The arrangement of the motorcycle tilt sensor according to claim 1 or 2, wherein the upper support tubes (32) comprise a fixation board (321) mounted thereto, the fixation board (321) extending from the head tube (31) and along the upper support tubes (32) toward a motorcycle rear side, the fixation board (321) comprising a mounting section (3211), the mounting section (3211) receiving a first mounting bracket (5) to be mounted thereto, the first mounting bracket (5) receiving the voltage regulator (7) and the tilt sensor (8) to be mounted thereto.

4. The arrangement of the motorcycle tilt sensor according to claim 3, wherein the first mounting bracket (5) comprises a front fastening section (51), an upper fastening section (52), and a side fastening section (53), the voltage regulator (7) being fastened to the front fastening section (51), the upper fastening section (52) being fastened to the mounting section (3211) of the fixation board (321), the side fastening section (53) receiving a second mounting bracket (6) to be mounted thereto, the tilt sensor (8) being fastened to the second mounting bracket (6).

5. The arrangement of the motorcycle tilt sensor according to claim 3 or 4, wherein the second mounting bracket (6) comprises a front fixing section (61) and a rear fixing section (62), the front fixing section (61) being fastened to the first mounting bracket (5), the rear fixing section (62) receiving the tilt sensor (8) to be mounted thereto.

6. The arrangement of the motorcycle tilt sensor according to claim 4, wherein the first mounting bracket (5) is of an inverted L-shape.

7. The arrangement of the motorcycle tilt sensor according to claim 5, wherein the front fixing section (61) is of a horizontal L-shape and the front fixing section (61) is mounted, in a sideways manner, to the side fastening section (53) of the first mounting bracket (5).

8. The arrangement of the motorcycle tilt sensor according to claim 1, wherein the head tube (31) comprise a pair of left and right upper support tubes (32) extending therefrom in a direction toward a motorcycle rear side, the head tube (31) comprising a pair of left and right lower support tubes (33) extending therefrom in a direction toward the motorcycle rear side and located below the upper support tubes (32), the head tube (31), the pair of left and right upper support tubes (32), the pair of left and right lower support tubes (33), and the fuel tank (2a) collectively delimiting a space in which the tilt sensor (8) is arranged.

9. The arrangement of the motorcycle tilt sensor according to claim 8, wherein the lower support tubes (33) comprise a radiator assembly (4) mounted thereto, the radiator assembly (4) comprising a radiator (41) and a radiator fan (42), the tilt sensor (8) being located between the radiator assembly (4) and the steering mechanism (3a).

10. The arrangement of the motorcycle tilt sensor according to claim 8, wherein vertical tubes (35) are arranged between the upper support tubes (32) and the lower support tubes (33).

## Amended claims

### Amended claims in accordance with Rule 137(2) EPC.

1. A motorcycle (2), comprising at least a frame unit (3), the frame unit (3) comprising a head tube (31), the head tube (31) comprising a steering mechanism (3 a) mounted thereto, a fuel tank (2a) being arranged behind the steering mechanism (3a) and set on the frame unit (3), an engine unit (2b) being arranged under the fuel tank (2a) to generate power, a seat cushion (2c) being arranged at a side of the fuel tank (2a) facing rearward to support a rider sitting thereon, **characterized in that** a tilt sensor (8) is set between the head tube (31) and the fuel tank (2a); the head tube (31) comprises a pair of left and right upper support tubes (32) extending therefrom in a direction toward a motorcycle rear side, the head tube (31) comprising a pair of left and right lower support tubes (33) extending therefrom in a direction toward the motorcycle rear side and located below the upper support tubes (32), the head tube (31), the pair of left and right upper support tubes (32), the pair of left and right lower support tubes (33), and the fuel tank (2a) collectively delimiting a space in which the tilt sensor (8) is arranged; the space delimited among the head tube (31), the pair of left and right upper support tubes (32), the pair of left and right lower support tubes (33), and the fuel tank (2a) also receives a voltage regulator (7) arranged therein; and the upper support tubes (32) comprise a fixation board (321) mounted thereto, the fixation board (321) extending from the head tube (31) and along the upper support tubes (32) toward a motorcycle rear side, the fixation board (321) comprising a mounting section (3211), the mounting section (3211) receiving a first mounting bracket (5) to be mounted thereto, the first mounting bracket (5) receiving the voltage regulator (7) and the tilt sensor (8) to be mounted thereto.

2. The motorcycle according to claim 1, wherein the first mounting bracket (5) comprises a front fastening section (51), an upper fastening section (52), and a side fastening section (53), the voltage regulator (7) being fastened to the front fastening section (51), the upper fastening section (52) being fastened to the mounting section (3211) of the fixation board (321), the side fastening section (53) receiving a second mounting bracket (6) to be mounted thereto, the tilt sensor (8) being fastened to the second mounting bracket (6).

3. The motorcycle according to claim 1 or 2, wherein the second mounting bracket (6) comprises a front fixing section (61) and a rear fixing section (62), the front fixing section (61) being fastened to the first mounting bracket (5), the rear fixing section (62) receiving the tilt sensor (8) to be mounted thereto.

4. The motorcycle according to claim 2, wherein the first mounting bracket (5) is of an inverted L-shape.

5. The motorcycle according to claim 3, wherein the front fixing section (61) is of a horizontal L-shape and the front fixing section (61) is mounted, in a sideways manner, to the side fastening section (53) of the first mounting bracket (5).

6. The motorcycle according to claim 1, wherein the lower support tubes (33) comprise a radiator assembly (4) mounted thereto, the radiator assembly (4) comprising a radiator (41) and a radiator fan (42), the tilt sensor (8) being located between the radiator assembly (4) and the steering mechanism (3a).

7. The motorcycle according to claim 1, wherein vertical tubes (35) are arranged between the upper support tubes (32) and the lower support tubes (33).
